# EUROPEAN PATENT SPECIFICATION

(11) **EP 0 493 845 B1**
(45) Date of publication and mention of the grant of the patent: **23.02.2000**
(21) Application number: 91203104.4
(22) Date of filing: 27.11.1991
(51) Int. Cl.: G11B 23/023

(54) **Holder for a rectangular cassette**
Gehäuse für eine rechteckige Kassette
Boîte pour cassette rectangulaire

(30) Priority: 04.12.1990 NL 9002653
(43) Date of publication of application: 08.07.1992
(73) Proprietor: Koninklijke Philips Electronics N.V., 5621 BA Eindhoven (NL)
(72) Inventor: Doodson, Peter John, NL-5656 AA Eindhoven (NL); Van Weele, Paul Johannes Frits, NL-5656 AA Eindhoven (NL)
(74) Representative: Cuppens, Hubertus Martinus Maria

(56) References cited:
- EP-A- 0 480 511
- EP-A- 0 480 515
- DE-A- 3 229 894
- DE-A- 3 701 371
- DE-A- 4 033 095
- FR-A- 2 508 222
- FR-A- 2 632 759
- US-A- 2 617 520
- US-A- 3 373 862
- US-A- 3 760 937
- US-A- 3 912 077

## Description

The invention relates to a holder according to the pre-characterising part of claim 1.

A holder of this type is known from US 3, 760, 937 as a container for audio cassettes. One of the short sides is open for inserting a cassette into or removing it from the cassette-receiving space. The holder is made of a plastics and has an open part in a wall which is dimensioned such that when the holder is held in the palm of a hand, the cassette can probably be pushed at least partly out of the holder with the thumb of the same hand.

When the size of the cassette is reduced, it is difficult to ascertain what programme has been recorded on the magnetic tape in the case of a prerecorded cassette because the label on the back of the cassette is only narrow.

This is particularly so when this cassette is an audio cassette of a new type as proposed by the Applicant, see the prior NL published application 9002082 (PHN 13.455, herewith incorporated by reference). This new cassette, a so-called digital audio cassette, is to be marketed *inter alia* in a version in which the magnetic tape has been provided with a music programme in a digital format by the relevant music industry. On a cassette main wall such cassettes provided with music (music cassette) have a large label providing the kind of pictorial and text information as customary until now with gramophone records and Compact Discs packages. In the case of gramophone records and Compact Discs the pictorial and text information is provided respectively on and in the package. In the case of said digital music cassette the cassette itself can be provided with a decorative and informative label which largely covers one main wall of the cassette. The back of the cassette may also be provided with a label. Obviously, due to the presence of reel shaft insertion holes, this label is much smaller and can therefore accommodate only a minimum of information which, moreover, can be read only at close range, as with the afore-mentioned video cassettes.

In music shops gramophone records, Compact Discs as well as analog music cassettes are generally offered for sale "dead", that is to say that only empty containers are present in the racks. The actual music-carrying medium is only inserted into the container in the case of purchase upon payment. Obviously, "dead" selling serves to preclude theft of the media. The containers in the racks have been provided with all the pictorial and text information which can be of interest to the prospective buyer of the medium. In the case of gramophone records the pictorial and text information is printed on the sleeves. In the case of music cassettes and Compact Discs a transparent plastics case is used which contains a printed enclosure which is readily visible from the outside of the container. In order to enable the "dead" sale of music cassettes the holder in accordance with the invention is characterised in that at the side opposite the window the holder has an internal enclosure space for the insertion of an enclosure, which may comprise a plurality of pages, and in the absence of a cassette the enclosure is visible from the outside through the window in the front wall of the holder. In this respect an advantageous embodiment, which is very suitable for the "dead" sale of digital music cassettes, is characterised in that at its side which faces the cassette receiving space the enclosure is given an appearance which is similar to the appearance of the label of the cassette. It will be obvious that the information on the enclosure which faces the interior of the holder will be of little significance to an owner of a digital music cassette. Indeed, the label of the cassette is visible from the outside through the window. However, said side of the enclosure is very suitable for the "dead" sale of the music cassette. The holder can be constructed in such a manner that the side of the enclosure is visible from the outside through the rear wall which is situated opposite the front wall of the holder, for example by making the rear wall transparent or providing it with a suitable opening. The side of the enclosure which faces the rear wall of the holder can therefore be provided with pictorial and text information which is visible at all times, *i.e.* both when the cassette is in the holder and when the cassette is not in the holder. A further embodiment which is of interest is characterised in that the enclosure space communicates with a flap space adjacent a side wall of the holder and the enclosure has a side flap which extends in the flap space. Likewise, this embodiment is of particular interest when the flap can be provided with text and/or pictorial information which is always visible from the outside of the cassette.

In particular in cars it is important that a cassette can be removed from its container with one hand, because it is necessary for the driver to keep at least one hand on the steering wheel. With portable apparatus it is also advantageous if the portable apparatus can be held in one hand and the cassette can be removed from its container with the other hand. An embodiment which is of particular interest is characterised in that the window is wholly open. In said formerly proposed digital cassettes, at least with specific embodiments of the cassette, the label is protected by a transparent cover connected to the cassette. In the proposed embodiment it is not necessary to use an imperforate window in the holder, which not only saves material for the holder but in a surprisingly simple manner also enables the cassette to be pushed out with the thumb *via* the large opening in the main wall of the holder.

Preferably, an embodiment of the invention is used which is characterised in that the dimensions of the window are substantially dual to the dimensions of the label of the cassette. The use of this embodiment enables all the relevant pictorial and text information on the cassette to be observed at a glance by a user from the outside of the holder, while at the same time all the non-relevant parts of the cassette are covered.

In order to avoid the afore-mentioned disadvantage of the prior-art holders that a cassette can readily fall out of its package, a further characteristic feature of the invention is important, which characteristic feature is that the holder comprises internal holding means for clamping a cassette which has been inserted into the cassette receiving space. In this respect a further embodiment is important, which is characterised in that the holding means comprise an elastic holding member which is situated in a transverse wall of the holder and which is deformed elastically by an inserted cassette. Suitably, use is made of a further characteristic feature in accordance with which the holding member is made of a material which is comparatively easy to deform in comparison with the material of the holder. This embodiment can be realised with advantage by the use of a further embodiment which is characterised in that the holding member comprises a plug arranged in an opening in a transverse wall of the holder. Tests have shown that the use of the above-mentioned embodiments effectively prevent the cassette from inadvertently falling out of the holder. The rubber-like properties of the holding member preclude damage to the cassette and to the holder.

Preferably, an embodiment of the invention is used which is characterised in that the holder comprises two separate sections which are secured to one another and which each comprise a main wall and an adjoining transverse wall. It is then advantageous, also because the holder has an enclosure space and a flap space, to use an embodiment which is characterised in that one section comprises the front wall with an adjoining side wall and the rear wall the other section comprises the other side wall. Thus, in addition to all the afore-mentioned advantages, the holder in accordance with the invention has the advantage of a simple construction requiring a small amount of material. The holder does not comprise any moving parts and, moreover, the holder requires only two parts which can be manufactured from a plastics by means of well-known injection-moulding techniques. An embodiment which is of interest for the visibility of an enclosure in the holder is characterised in that said other section is made of a transparent plastics. Preferably, this embodiment is combined with a further embodiment which is characterised in that said one section is made of a non-transparent plastics and substantially covers those parts of a cassette present in the holder which adjoin the label.

An embodiment of the invention which is of interest to facilitate the manufacture of the holder and also to minimize material consumption is characterised in that the enclosure space is in open communication with the cassette receiving space and between the enclosure space and the cassette receiving space inside the holder ridges are formed at opposite sides for cooperation with the side edges of the enclosure. For a correct guidance of the cassette in that case that the holder has a flap space an embodiment is of interest which is characterised in that an internal transverse wall, which forms part of one of the sections of the holder, is interposed between the flap space and the cassette receiving space in such a manner that the flap space is bounded by a side wall and the internal transverse wall. An additional advantage of this embodiment is that if the cassette is not situated correctly in the holder the flap is nevertheless enclosed correctly in the flap space and, moreover, that the cassette receiving space is distinctly bounded, which is important in view of the afore-mentioned "dead" sale of the digital music cassette.

The holder in accordance with the invention comprises only a small number of parts, does not require any moving parts, and offers a high degree of functionality, as already set forth hereinbefore. However, if desired, an embodiment may be used which is characterised in that the open side of the holder can be covered with a cover which is pivotally connected to the holder. This embodiment provides an additional guarantee that the cassette cannot readily fall out of the container. Another advantage is that the holder has an attractive enclosed appearance. Another interesting embodiment of the invention is characterised in that the cover is connected to a main wall by a plastics integral hinge. Consequently, it is not necessary to provide the holder with separate parts. A further embodiment which is of interest is characterised in that the cover is pivotally connected to the rear wall of the holder and there is provided a spring mechanism permitting the cover to assume only two stable positions, *i.e.* either a fully closed position or a fully open position. Suitably, the transparent part of the holder is made of a styrene/butadiene-block copolymer. Plastics of this type are suitable for forming integral hinge constructions and are available in a glass-clear quality.

In one embodiment of the invention the holder has a plurality of cassette-receiving spaces. Consequently, the holder in accordance with the invention is also suitable for holding two or more cassettes, for example in the case that a recording cannot be accommodated on a single recording medium.

The invention relates not only to a holder for a rectangular cassette but also to a method of removing a cassette from a holder, *i.e.* by taking the holder with the cassette held therein in one hand, pushing the cassette at least partly out of an open side of the holder with the thumb of the same hand through an opening in a wall of the holder, and subsequently removing it completely from the holder. As already set forth hereinbefore, such a method is particularly advantageous when cassettes are used in automotive or portable apparatus. Such a method is of particular advantage if it is combined with the loading of the cassette into an apparatus *via* a slot in the front panel of said apparatus, the method comprising the insertion of the part of the cassette which has been pushed out of the holder into the slot, after which the cassette is gripped by a loading mechanism of the apparatus, which mechanism pulls the cassette further out of the holder and into the apparatus. This method of loading a cassette into a playing apparatus minimizes the operations to be performed by the user. The user no longer has to remove the cassette completely from the holder and merely has to push the cassette out of the holder over some distance with his thumb. The remainder of the operation is performed by the loading mechanism of the apparatus.

Also very interesting is a method of removing a cassette from an apparatus and inserting it into a holder, the method comprising the positioning of the holder with an open side before the front panel of the apparatus opposite a slot in the front panel and the at least partial insertion of the cassette into the holder through the slot by the apparatus. With this method the insertion of the cassette back into the holder is also performed at least partly by the apparatus. This enables a driver of a car to keep his attention focused on driving and on the traffic. A further improvement of the last-mentioned method comprises the actuation of switching means by the holder and, as a result of this, the outward movement of the cassette by means of an electric motor. In this way automatic removal of the cassette from the apparatus and reinsertion of the cassette into the holder is realised. A point which still requires some attention from a driver is the correct positioning relative to the slot in the apparatus. In order to preclude this problem the invention provides a further method, comprising the guidance of the holder by guide surfaces provided around the slot to a docking position defined by stop means, in which position the cassette receiving space is disposed in line with the path along which the cassette is moved by the loading mechanism of the apparatus.

If desired, a method may be used, comprising the at least partial insertion of the holder with the cassette into an apparatus and the movement of the cassette into/out of the holder by the apparatus itself inside the apparatus. This method leads to further improved user convenience.

The invention will now be explained with reference to the drawings which, by way of non-limitative illustration of the invention, relate to some possible embodiments of the invention intended for use with a digital music cassette and in which:
Figure 1 is a perspective view of a holder and a digital music cassette which has been slid out over some distance by a user with the thumb of the right hand,
Figure 2 is an exploded view of a digital music cassette,
Figure 3 is an underneath view of the music cassette shown in Fig. 2,
Figure 4 is a front view of the music cassette shown in Figs. 2 and 3,
Figure 5 is a plan view of the music cassette shown in Fig. 2,
Figure 6 is a plan view of a holder in accordance with the invention for the music cassette shown in Figures 2 to 5,
Figure 7 is a front view of the holder shown in Fig. 6, as indicated by the arrow VII,
Figure 8 is a rear view of the holder shown in Fig. 6, as indicated by the arrow VIII,
Figure 9 is a side view of the holder shown in Fig. 6, as indicated by the arrow IX,
Figure 10 is a side view of the holder shown in Fig. 6, as indicated by the arrow X,
Figure 11 is a cross-sectional view of the holder shown in Fig. 6, taken on the arrows XI-XI,
Figure 12 is a cross-sectional view of the holder shown in Fig. 6, taken on the arrows XII-XII,
Figure 13 shows the non-transparent part of the holder of Fig. 6 in a perspective view at the inner side of the front wall,
Figure 14 shows the transparent part of the holder of Fig. 6 in a perspective view at the inner side of the rear wall,
Figure 15 is a part of a cross-sectional view taken on the arrows XIII-XIII in Fig. 9,
Figure 16 is a part of a cross-sectional view taken on the arrows XVI-XVI in Fig. 15,
Figure 17 is the upper part of a side view similar to that of Fig. 10 and showing an embodiment of the holder provided with a cover for closing the open side,
Figure 18 is a part of a sectional view similar to that of Fig. 11 but now showing a holder with a cover as illustrated in Fig. 17,
Figure 19 is a front view similar to that in Fig. 7 but now showing a holder with a cover as illustrated in Figs. 17 and 18,
Figure 20 is a perspective view of a text enclosure comprising a plurality of pages and a side flap,
Figure 21 is a perspective view of a holder having two cassette-receiving spaces arranged one behind the other and two cassettes partly inserted therein,
Figure 22 is a perspective view of the empty holder of Fig. 21, viewed obliquely from the rear, the transparent rear part being removed from the non-transparent front part,
Fig. 23 is a perspective view of a holder having two juxtaposed cassette-receiving spaces and a cassette inserted partly in one of these spaces,
Fig. 24 is a perspective view of the empty holder of Fig. 23, viewed obliquely from the rear, the transparent rear part being removed from the non-transparent front part,
Figure 25 is a perspective view of a car-radio/cassette player comprising docking means for docking a holder in accordance with the invention, and
Figure 26 is a cross-sectional view of the docking means shown in Fig. 25 with a holder provided with a cassette in the docked position.

The holder 1 shown in the drawings is intended as a container for a rectangular cassette 2. For an even better protection of both the container and the cassette therein this assembly may be wrapped in cellophane or shrink foil in the customary way.

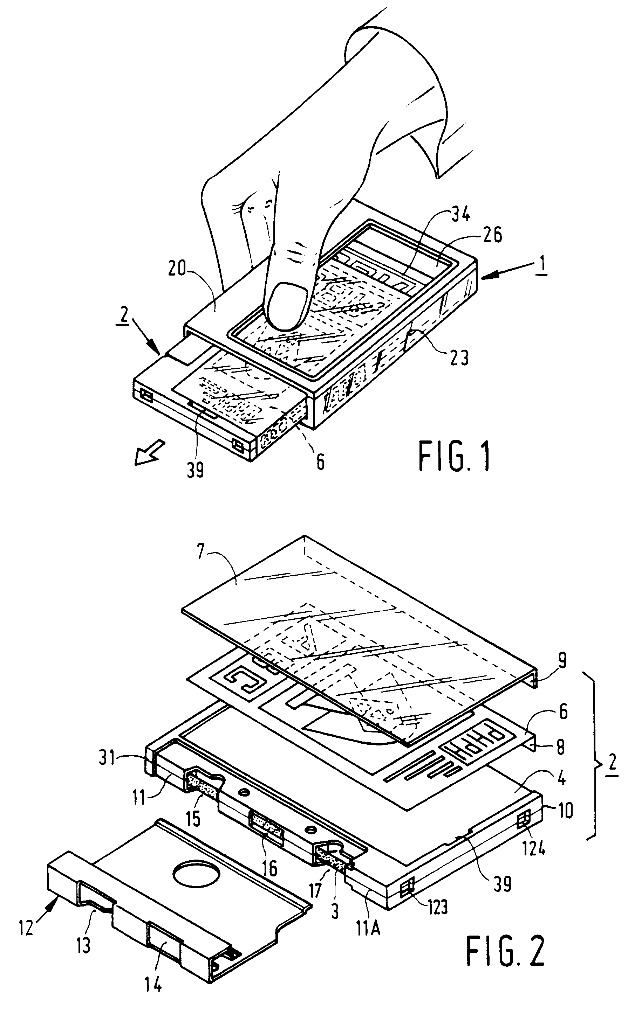

For a correct understanding of the remainder of the description the cassette will be described briefly with reference to Figs. 2 to 5. The cassette is a "digital music cassette", *i.e.* a cassette with a magnetic tape 3 provided with a music programme in a digital format by a music company. For more details on the digital cassette, which has been proposed earlier by the Applicant, and the digital recording and reproducing system to which the cassette belongs reference is made to the Applicant's prior European Patent Applications bearing the publication numbers 0 400 744 A1 (= PHN 12.959), "System for recording/reproducing signals on magnetic tape in cassettes"; 0 405 661 A1 (= PHN 13.003), "System for recording/reproducing signals on/from a magnetic tape in a cassette"; 0 406 943 A1 (= PHN 13.018), "Reversible cassette"; 0 429 122 A2 (= PHN 13.185 + 13.145) "System for recording/reproducing signals on magnetic tape in cassettes"; 0 478 057 A1 (PHN 13.455), "Cassette with magnetic tape on two coplanar reels"; (PHO 90.505) and (PHO 90.506)), entitled "Kassette für einen Aufzeichnungsträger", and 0 434 143 A2 (PHD 90.197), "Anordnung bestehend aus einem Magnetbandkassettengerät mit einem Laufwerk und Lademechanismus für Magnetbandkassetten und aus einer Magnetbandkassette".

All the above-mentioned Patent Applications are incorporated herewith by reference.

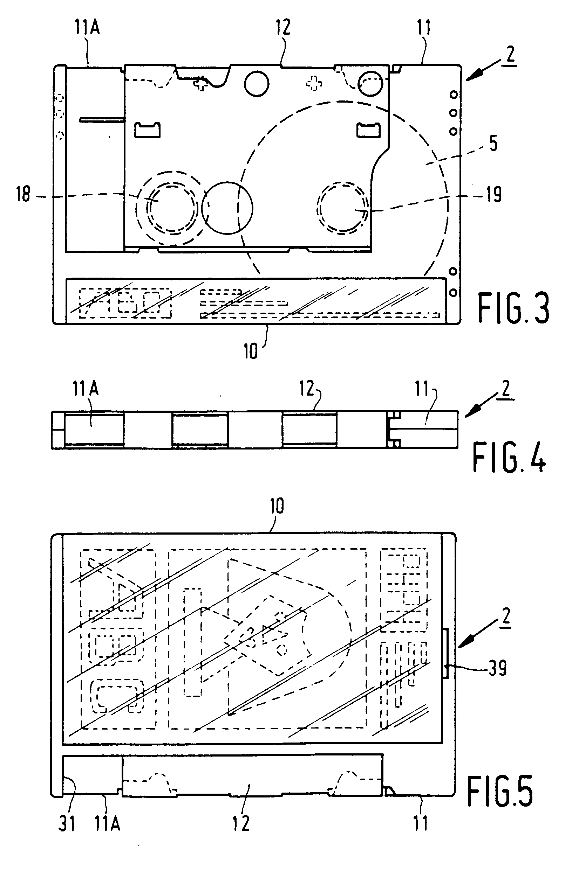

The cassette comprises two main walls 4 and 5 at respectively the upper side and the lower side of the cassette. The main wall 4 is provided with a label 6 which is made of, for example, paper and which may be provided with pictorial and text information, if desired in colour. To protect the label and to improve the appearance of the cassette the label is covered by a transparent cover element 7. The label has a flap 8 which is covered by a corresponding part 9 of the transparent cover element 7. The flap is situated at the back 10 of the cassette and may also be provided with pictorial and/or text information. A slide 12 is slidable over the front wall 11 of the cassette. The slide has two openings 13 and 14 to expose the openings 15, 16 and 17 in the front wall of the cassette in order to allow the entry of a magnetic-head unit, capstans and pressure rollers of an apparatus. In the closed position the slide 12 covers two openings 18 and 19 in the bottom wall 5 of the cassette. When the slide is in the open position these openings give drive means of an apparatus access to two reel hubs of the cassette. Resilient means, not shown, urge the slide towards its closed position. Thus, normally speaking, when the cassette is outside an apparatus, the slide 12 will be in its closed position, as is shown in Figs. 3 to 5.

The holder 1 comprises two parallel main walls 20 and 21 and three interconnecting transverse walls. The holder also has an open side 25 through which the cassette can be inserted into or removed from the holder. The main walls and the transverse walls thus define a cassette receiving space which is accessible *via* the open side 25. The main wall 20 forms a front wall of the holder. This front wall has a window 26 through which the label 6 of the cassette 2 present in the holder is visible from the outside. The other walls of the holder form a rear wall 21, long side walls 22 and 23, and a short bottom wall 24.

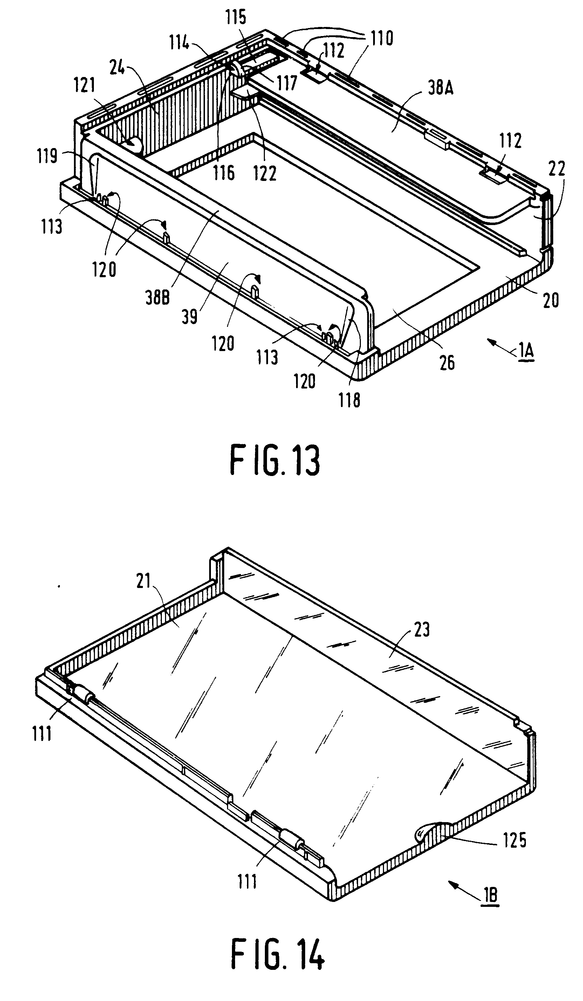

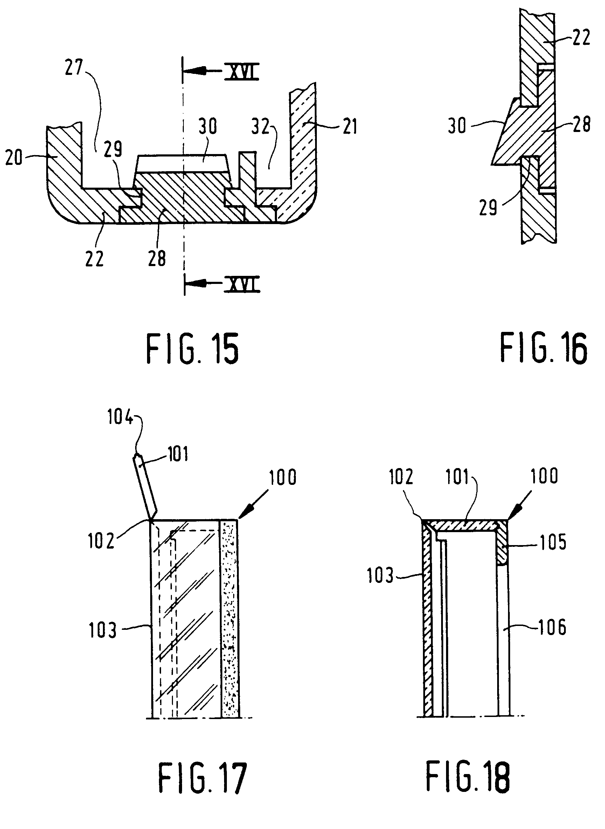

The holder comprises internal holding means for clamping a cassette inside the cassette receiving space 27. These holding means comprise an elastic holding member 28 which is situated in the transverse wall 22 and which is deformed elastically upon insertion of a cassette. In the present embodiment the holding member is made of a material which is readily deformable in comparison with the material of the holder, *i.e.* an elastomeric material or another material having rubber-like properties. It is constructed as a plug fitted in an opening 29 in the transverse wall 22, see in particular Figs. 15 and 16. The opening 29 has a rectangular shape to avoid rotation of the plug 28. As will be apparent from Figs. 13 and 14 the plug has an inclined contact face 30, so that upon insertion of a cassette into the cassette receiving space 27 the plug is deformed gradually. The plug cooperates with the part 11a of the front wall 11 of the cassette. In the closed position of the slide this part of the front wall of the cassette is not covered by the slide. The housing of the cassette has a ridge 31 which serves as a stop for the slide when the slide is opened. Preferably, the plug 28 is arranged at such a location in the side wall 22 of the holder that upon insertion of a cassette into the holder the ridge 31 moves just past the plug 28, so that the cooperation between the ridge 31 and the plug assists in holding the cassette in the holder.

In the front wall 20 the window comprises an open part having dimensions large enough to enable the cassette to be pushed at least partly out of the holder when the holder is held in the palm of one hand with the thumb on the label of the cassette. In the embodiment shown the window 26 is completely open and has a size substantially equal to that of the label of the cassette.

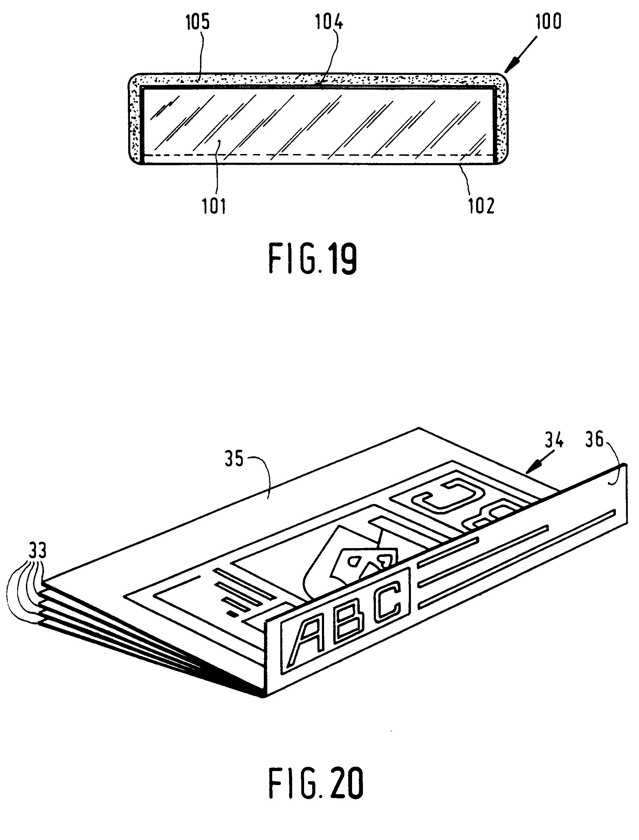

At the side opposite the window 26 near the rear wall the holder has a separate enclosure space 32 for the insertion of an enclosure 34, which may comprise a plurality of pages 33. The enclosure is shown separately in Fig. 20. In the example shown the enclosure resembles a booklet having a booklet cover 35. In the absence of a cassette the enclosure is visible from the outside through the window 26 of the holder. This can be seen in Fig. 1, which shows a part of the cover of the enclosure 34.

The cover 35 of the enclosure 34 faces the cassette receiving space 27 and has an appearance, *i.e.* has been provided with pictorial and text information, similar to the appearance of the label 6 of the cassette. Thus, the pictorial and text information visible through the window 26 is always the same, regardless of the presence of the cassette 2. As already stated hereinbefore, this is important for the "dead" sale of music cassettes.

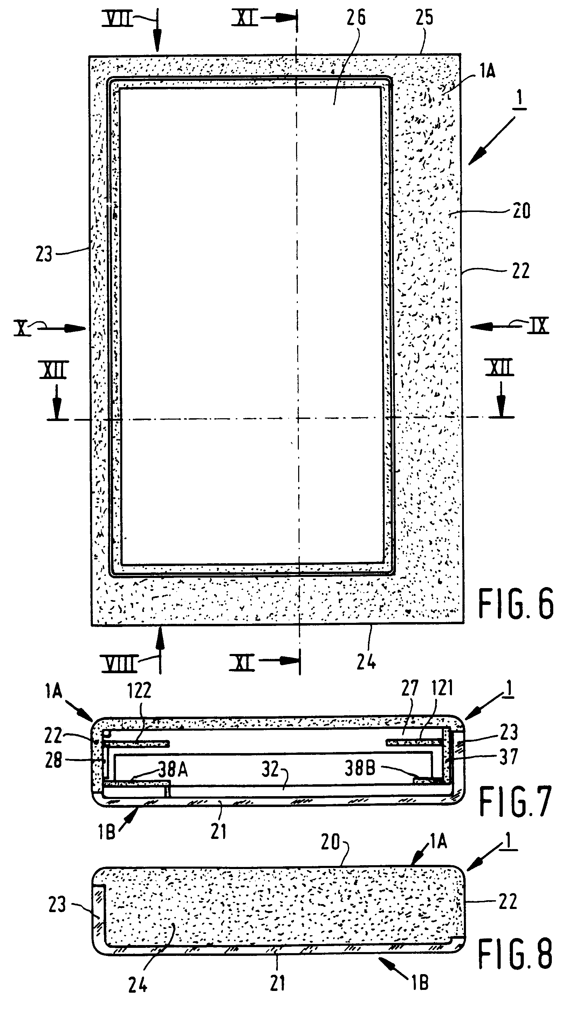

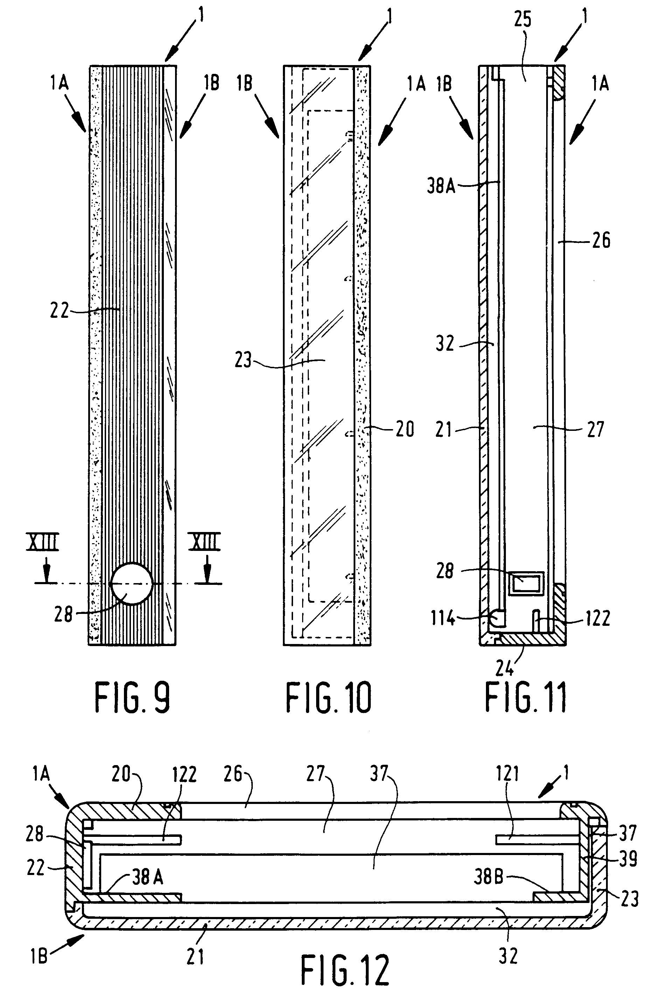

As is apparent from Fig. 20, the enclosure 34 has a side flap 36. When the enclosure is inserted into the enclosure space 32 this flap is accommodated in a flap space 37 which communicates with the enclosure space 32, see in particular Fig. 7 and Fig. 12. The side flap 36 *inter alia* assists in retaining the enclosure in the enclosure space.

The holder 1 comprises two separate sections 1A and 1B secured to one another. Preferably, these sections are made of a suitable plastics and can be interconnected by cementing, ultrasonic welding or in any other suitable manner. Each of the two sections comprises a main wall and an adjoining transverse wall. For example, the section 1A comprises the front wall 20 and the adjoining side wall 22 and bottom wall 24, and the section 1B comprises the rear wall 21 and the adjoining side wall 23. The section 1B is made of a transparent plastics, so that after insertion into the holder both the rear of the enclosure 34 and the outwardly facing side of the flap 36 are visible from the outside. Thus, these parts of the enclosure 34 may also be printed with suitable information for the consumer. This information need not be the same as the pictorial and text information provided on the cover 35. Indeed, the last-mentioned information is always, *i.e.* regardless of the presence of a cassette, visible from the outside. Therefore, the information which is visible from the outside through the transparent window 1B may be additional information.

The section 1A is made of a non-transparent plastics and this section, see in particular Fig. 1, covers all those parts of a cassette in the holder which adjoin the label 6, so that if a cassette is present the window 26 only exposes the label 6. This also contributes to the structural integrity of the holder.

As is apparent in particular from Figs. 7 and 11 the cassette receiving space 27 is in open communication with the enclosure space 32. Two ridges 38A and 38B extend between the two spaces inside the holder at opposite sides. In the embodiment shown both ridges form part of the non-transparent section 1A of the holder. The two ridges cooperate with side edges of the enclosure 34 and thus retain this enclosure in the enclosure space. An internal transverse wall 39, which forms part of the section 1A of the holder, is situated between the flap space 37 and the cassette receiving space 27. At one side the flap space 37 is thus bounded by the transparent side wall 23 and at the other side by the non-transparent internal transverse wall 39. The non-transparent internal wall 39 also helps to ensure that the cover 35 of the enclosure 34 can be read correctly in the absence of a cassette.

Some details which are of importance in production will now be discussed with reference to Figs. 13 and 14.

The sections 1A and 1B are permanently joined by ultrasonic welding. For this purpose the section 1A comprises a plurality of thin welding ridges 110 which melt during welding. The section 1B also has welding ridges at a location which is not visible in the drawing and which is situated behind the side wall 23.

The sections 1A and 1B also comprise means for provisionally assembling them, so that if desired the sections can be disassembled for inserting the enclosure before the holder is finally welded. Said means comprise snap projections 111 which engage in corresponding recesses 112, and conical pins 113 which fit tightly in recesses, not shown in Fig. 14, in the side wall 23.

A resilient clamping member 114 for retaining the enclosure is arranged near the bottom wall 24 in line with the ridge 38A. The clamping member comprises a blade spring 115 and a run-on projection 116 with a rounded surface 117. The clamping member is made of a plastics and is integral with the section 1A. The rounded surface 117 ensures a gradual deformation of the blade spring 115 when an enclosure is inserted. The enclosure may have an opening corresponding to the run-on projection, so that the enclosure is held even more effectively.

To facilitate insertion of the side flap of an enclosure into the flap space the transverse wall 39 comprises gradually inclined portions 118, 119. In addition, there are bevelled guide projections 120. A projection 125 at the front of the section 1B constitutes a further means to prevent the enclosure from slipping out.

The bottom wall 24 carries projections 121, 122 for cooperation with recesses 123, 124 of the cassette (see Fig. 2). These recesses have a characteristic mutually different depth, shape and position. Only when the cassette is slid into the holder in the correct orientation will the projections 121, 122 engage the recesses 123, 124 in such a manner that the cassette can be inserted wholly into the holder. In all other cases the cassette will abut against said projections in a partly inserted position. This will effectively draw the user's attention to the fact that the cassette is not oriented correctly. A correct orientation may be required in particular in view of a correct cooperation with an apparatus in accordance with an inventive method to be described hereinafter.

Figures 17 and 18 relate to a holder 100 which largely resembles the holder 1 shown in the preceding Figures but which comprises a cover 101 which is pivotally connected to the holder at the open side of this holder. This cover is connected to the plastics rear wall 103 by a plastics integral hinge 102. A suitable plastics which is available in a glass-clear quality is, for example, a styrene/butadiene-block copolymer. Plastics of this type are available from various manufacturers.

In the present embodiment the front of the cover 101 carries a snap projection 104 which is engageable in a corresponding recess formed in the inner surface of the front wall 105 of the holder 100. This projection provides a certain degree of locking of the cover 101 in its closed position. This locking is such that it is easy to cancel by pushing out the cassette *via* the open window 106 in the front wall. However, in principle, locking can be such that the cover has to be opened before removal of the cassette from the holder.

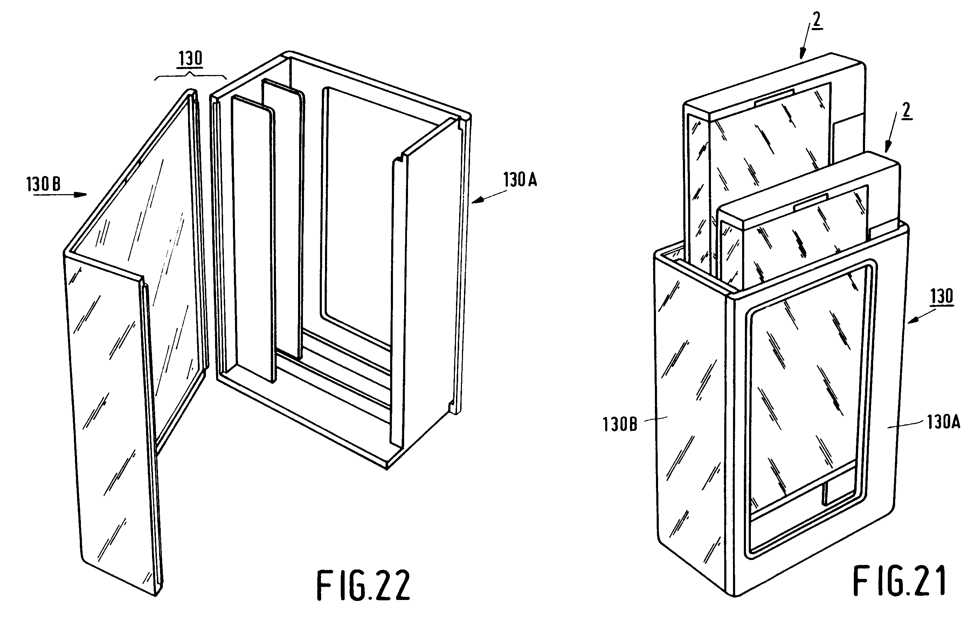

After the comprehensive description of the single holder the double holders shown in Figs. 21-24, which bear much resemblance to the single holder, will be described only briefly.

In the holder 130 shown in Figs. 21, 22 the receiving spaces are disposed in line. The holder has a non-transparent section 130A and a transparent section 130B. The holder is thicker than the holder 1, so that the side flap of an enclosure can be larger. The enclosure may provide information about both cassettes.

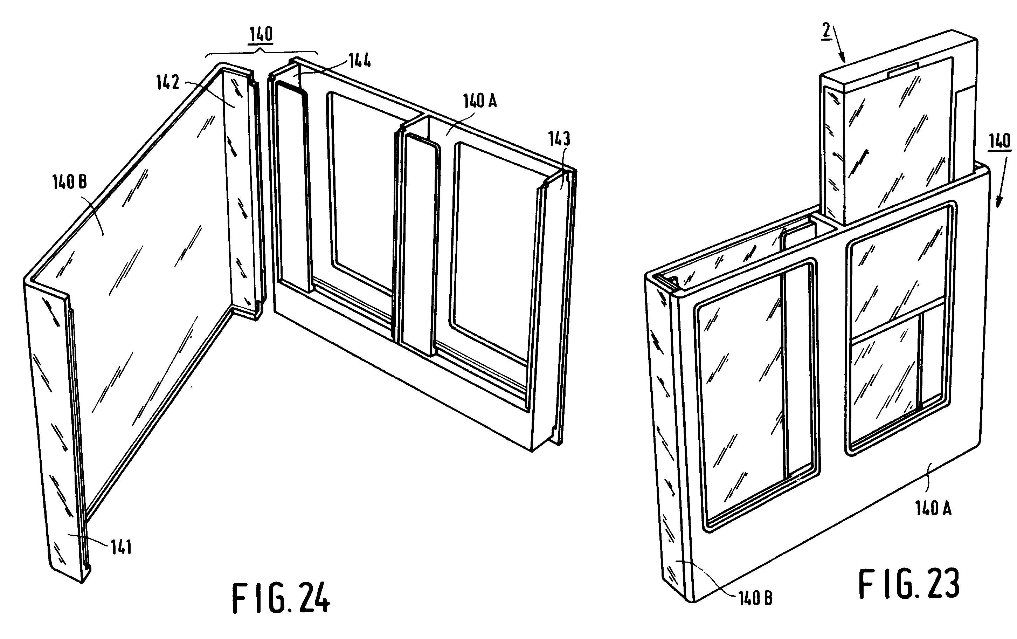

In the holder 140 shown in Figs. 23, 24 the receiving spaces are arranged side by side. The transparent section 140B has side walls 141, 142 at both sides, which walls together with the walls 143, 144 of the non-transparent section 140A bound two flap spaces for side flaps of an enclosure. Thus, the flap at each side may contain information about the adjacent cassette. If desired, the outer dimensions of this holder may be selected in such a way that they correspond to the outer dimensions of the well-known CD-packages. This has the advantage that the holder fits in the displays designed for selling Compact Discs in music shops.

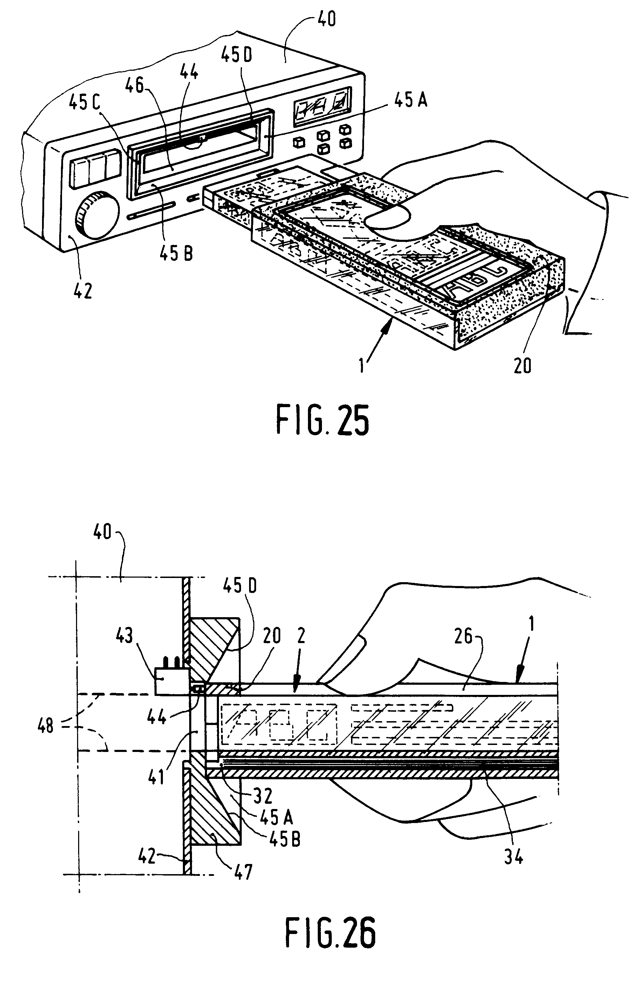

The invention also relates to an interesting method of removing a cassette from a holder. By taking the holder with the cassette clamped therein in one hand the cassette 2 can subsequently be pushed out at least partly through the open side 25 with the thumb of the same hand *via* the open window 26 in the front wall 20 of the holder. After this the cassette can be removed completely from the holder, if necessary. This method may be of interest if after removal of the cassette from the holder the cassette is to be loaded into an apparatus 40, see Figs. 25 and 26. Loading is effected *via* a slot 41 in a front panel 42 of the apparatus. The apparatus shown may be, for example, a car-radio recorder but may alternatively be a portable recorder or radio-recorder or a stationary recorder or radio-recorder for home entertainment. The cassette is pushed out of the holder over some distance by means of the thumb and the part of the cassette which projects from the holder is inserted into the slot 41, after which the cassette is gripped by a loading mechanism (not shown) of the apparatus, which mechanism pulls the cassette completely out of the holder 1 into the apparatus. Loading mechanisms which automatically pull a cassette inserted partly in a slot further into an apparatus are widely known *per se*, for example from the afore-mentioned EP application, publication No. 0 434 143 A2 and are therefore not described herein. An important feature in this connection is the presence of a gripping recess 39 at the front of the part of the cassette 2 which projects from the holder. The loading mechanism may comprise gripping means which are engageable with the gripping recess 39 to pull the cassette inward.

Insertion of the cassette into the slot 41 is possible in two ways. Fig. 25 shows that the cassette can first be pushed out of the holder over some distance with the thumb of one hand, after which this part which projects from the holder is inserted into the slot. Conversely, in the situation illustrated in Fig. 26 the holder is first positioned before the slot, after which the cassette is partly slid through the slot 41 in the apparatus by means of the thumb. However, this is not a basic difference. If it is difficult to position the holder correctly relative to the slot the first method would seem to be preferable.

For the reinsertion of the cassette into the holder it is possible to use a method in accordance with which the holder 1 is positioned with its open side 25 before the front panel 42 at the location of the slot 41, after which the cassette is inserted, or at least partly inserted, into the holder by the apparatus *via* the slot 41. If the cassette is inserted only partly into the holder it can be inserted further by hand, for example by means of the thumb. Figures 25 and 26 show that it is possible to employ switching means, for example comprising a mechanical switch 43 with a push-button 44. The push-button 44 is actuated by the front wall 20 of the holder. As a result of this the loading mechanism of the apparatus ejects the cassette by means of an electric motor. The ejection of a cassette by means of an electric motor through a slot in a magnetic recorder is generally known, see for example the afore-mentioned German Patent Application, and is common practice particularly with car-radio recorders, so that no further explanation will be given about this aspect of the operation of the apparatus.

As already stated hereinbefore, it may sometimes be difficult to position the holder exactly before the slot 41. In view of this, an elaboration of the method is of interest, in which the holder 1 is guided to a docking position defined by stop means by guide surfaces 45A, B, C and D around the slot 41, see Fig. 26. The stop means comprise a stop edge 46 situated around the slot 41. Both the guide surfaces 45A to 45D and the stop edge 46 belong to a docking means comprising a plastics frame 47 secured in the front panel 42 and formed with the slot 41. The guide surfaces 45A to 45D are inclined relative to the stop edge 46 and, as a result of this inclined orientation, they assist in guiding the holder from an inexact coarse position into the unambiguously defined docking position necessary for sliding the cassette into or out of the holder.

In the docking position shown, as illustrated clearly in Fig. 26, the cassette is disposed exactly in line with the path 48 along which the cassette is moved by the loading mechanism of the apparatus. This is achieved in that the part of the stop edge 46 which is situated opposite the enclosure space 32 of the holder is wider than the part situated opposite the front wall 20. The receiving space of the holder is thus exactly aligned with the slot 41. This ensures an unobstructed insertion and removal of the cassette.

The apparatus 40 in accordance with the invention shown in Figs. 25, 26 may be of an entirely different construction. For example, the docking means may have a different shape and, if desired, they may be integrated with the front panel 42. The switching means may be electronic or electro-optical instead of mechanical. The docking means may be arranged inside the apparatus. The automatic means for transport of the cassette may cooperate with the cassette *via* the window 26. The holder with the cassette may be inserted into the apparatus as a unit, the cassette then being removed from the holder inside the apparatus.

Although the invention has been described above on the basis of examples of holders provided with one or more magnetic-tape cassettes, the invention is not limited to its use in conjunction with such a recording medium. The holder in accordance with the invention can also be used for other suitable media, such as disc-shaped media with or without a cassette. Apart from magnetic media optical, magneto-optical or any other record carriers may be stored in the holder.

## Claims

1. A holder (1) for a rectangular cassette (2) provided with a recording medium (3), which cassette has a cassette main wall (4) optionally provided with a label (6), which holder comprises a front wall (20) having a window (26) and a rear wall (21) which are parallel to the cassette main wall, two long side walls (22, 23), one short bottom wall (24), and one open side (25) opposite the short bottom wall, said walls bounding a cassette-receiving space (27) in the holder into which the cassette can be inserted *via* the open side, the window (26) comprising an open part in the front wall (20), the open part being dimensioned in such a way that, when the holder is held in the palm of a hand, the cassette (2) can be pushed at least partly out of the holder with the thumb of the same hand on a cassette main wall (7), characterised in that at the side opposite the window (26) the holder has an internal enclosure space (32) for the insertion of an enclosure (34), which may comprise a plurality of pages (33), and in the absence of a cassette (2) the enclosure (34) is visible from the outside through the window (26) in the front wall (20).

2. A holder (1) as claimed in Claim 1, characterised in that the window (26) is wholly open.

3. A holder (1) as claimed in Claim 2, characterised in that the dimensions of the window (26) are substantially equal to the dimensions of the label (6) of the cassette (2).

4. A holder (1) as claimed in Claim 1, characterised in that the holder comprises internal holding means for clamping a cassette (2) which has been inserted into the cassette receiving space (27).

5. A holder (1) as claimed in Claim 4, characterised in that the holding means comprise an elastic holding member (28) which is situated in a transverse wall (22) of the holder and which is deformed elastically by an inserted cassette (2).

6. A holder (1) as claimed in Claim 5, characterised in that the holding member (28) is made of a material which is comparatively easy to deform in comparison with the material of the holder.

7. A holder (1) as claimed in Claim 6, characterised in that the holding member (28) is made of a material having rubber-like properties.

8. A holder (1) as claimed in Claim 7, characterised in that the holding member (28) comprises a plug arranged in an opening (29) in a transverse wall (22) of the holder.

9. A holder (1) as claimed in Claim 1, characterised in that at its side which faces the cassette receiving space (27) the enclosure (34) is given an appearance which is at least substantially similar to the appearance of the label (6) of the cassette (2).

10. A holder (1) as claimed in Claim 9, characterised in that the enclosure space (32) communicates with a flap space (37) adjacent a side wall (23) of the holder, and the enclosure (34) has a side flap (36) which extends in the flap space (37).

11. A holder (1) as claimed in Claim 1, characterised in that the holder comprises two separate sections (1A, 1B) which are secured to one another.

12. A holder (1) as claimed in Claim 11, characterised in that one section (1A) comprises the front wall (20) with an adjoining side wall (22) and the bottom wall (24) and the other section (1B) comprises the rear wall (21) with the other side wall (23).

13. A holder as claimed in Claim 12, characterised in that said other section (1B) is made of a transparent plastics.

14. A holder as claimed in Claim 13, characterised in that said one section (1A) is made of a non-transparent plastics and substantially completely covers those parts of a cassette (2) present in the holder which adjoin the label (6).

15. A holder as claimed in Claim 1, characterised in that the enclosure space (32) is in open communication with the cassette receiving space (27), and between the enclosure space and the cassette receiving space inside the holder ridges (38A, 38B) are formed at opposite sides for cooperation with the side edges of the enclosure (34).

16. A holder as claimed in Claims 10 and 11, characterised in that an internal transverse wall (39), which forms part of one (1A) of the sections of the holder, is interposed between the flap space (37) and the cassette receiving space (27) in such a manner that the flap space is bounded by a side wall (23) and the internal transverse wall (39).

17. A holder (100) as claimed in Claim 1, characterised in that the open side of the holder can be covered with a cover (101) which is pivotally connected to the holder (Figs. 15-17).

18. A holder (100) as claimed in Claim 17, characterised in that the cover (101) is connected to a main wall (103) by a plastics integral hinge (102).

19. A holder (100) as claimed in Claim 17, characterised in that the cover (101) is pivotally connected to the rear wall (103) of the holder, and there is provided a spring mechanism permitting the cover to assume only two stable positions, *i.e.* either a fully closed position or a fully open position.

20. A holder as claimed in Claims 13 and 18, characterised in that the transparent part of the holder is made of a styrene/butadiene-block copolymer.

21. A holder as claimed in any one or several of the preceding Claims, characterised in that the holder has a plurality of cassette receiving spaces.

22. Method of removing a rectangular cassette (2) provided with a recording medium (3) from a holder (1) as defined in claim 1, in which cassette is removed from the holder by taking the holder with the cassette clamped therein in one hand, pushing the cassette at least partly out of an open side (25) of the holder with the thumb of the same hand through the opening (26) in the wall (20) of the holder, and subsequently removing it completely from the holder.

23. A method of removing a cassette (2) from a holder (1), as claimed in Claim 22, and loading the cassette into an apparatus (40) *via* a slot (41) in a front panel (42) of said apparatus, the method comprising the insertion of the part of the cassette which has been pushed out of the holder into the slot, after which the cassette is gripped by a loading mechanism of the apparatus, which mechanism pulls the cassette completely out of the holder into the apparatus.

24. A method of removing a cassette (2) from an apparatus (40) and inserting it into a holder (1) as claimed in Claim 1, the method comprising the positioning of the holder with an open side before the front panel (42) of an apparatus opposite a slot (41) in the front panel and the at least partial insertion of the cassette into the holder through the slot by the apparatus.

25. A method as claimed in Claim 24, comprising the actuation of switching means (43, 44) by the holder (1) against the front panel (42) and, as a result of this, the outward movement of the cassette (2) by means of an electric motor.

26. A method as claimed in any one or several of the Claims 23-25, comprising the guidance of the holder (1) by guide surfaces (45A-45D) provided around the slot (41) to a docking position defined by stop means (46), in which position the cassette receiving space (27) is disposed in line with the path (48) along which the cassette (2) is moved by the loading mechanism of the apparatus (40).

27. A method of moving a cassette into/out of a holder as claimed in Claim 1, the method comprising the at least partial insertion of the holder with the cassette into an apparatus and the movement of the cassette into/out of the holder by the apparatus itself inside the apparatus.

## Patentansprüche

1. Behälter (1) für eine rechteckige Kassette (2) mit einem Aufzeichnungsmedium (3), wobei diese Kassette eine Kassettenhauptwand (4) aufweist, die ggf. mit einem Aufkleber (6) versehen ist, wobei dieser Behälter eine Vorderwand (20) mit einem Fenster (36) und eine Rückwand (21) aufweist, wobei diese wände sich parallel zu der Kassettenhauptwand erstrecken, wobei der Behälter weiterhin zwei lange Seitenwände (22, 23), eine kurze Bodenwand (24) und eine offene Seite (25) gegenüber der kurzen Bodenwand aufweist, wobei die genannten Wände einen Kassettenaufnahmeraum (27) in dem Behälter begrenzen, in den die Kassette durch die offene Seite hindurch eingeschoben werden kann, wobei das Fenster (26) einen offenen Teil in der Vorderwand (20) aufweist, wobei dieser offene Teil derart bemessen ist, dass wenn der Behälter in der Handgehalten wird, die Kassette (2) mit dem Daumen derselben Hand auf einer Kassettenhauptwand (7) wenigstens teilweise aus dem Behälter herausgeschoben werden kann, dadurch gekennzeichnet, dass an der Seite gegenüber dem Fenster (26) der Behälter einen inneren Informationsblattraum (32) aufweist zum Einfügen eines Informationsblatts (34), das eine Anzahl Seiten (33) umfassen kann, und dass beim Fehler einer Kassette (2) das Informationsblatt (34) von der Außenseite durch das Fenster (26) in der Vorderwand (20) hindurch sichtbar ist.

2. Behälter (1) nach Anspruch 1, dadurch gekennzeichnet, dass das Fenster (26) völlig offen ist.

3. Behälter (1) nach Anspruch 2, dadurch gekennzeichnet, dass die Abmessungen des Fensters (26) denen des Aufklebers (6) der Kassette (2) nahezu entsprechen.

4. Behälter (1) nach Anspruch 1, dadurch gekennzeichnet, dass der Behälter innere Festhaltemittel aufweisen zum Festklemmen einer Kassette (2), die in den Kassettenaufnahmeraum (27) eingeführt worden sind.

5. Behälter (1) nach Anspruch 4, dadurch gekennzeichnet, dass die festhaltemittel ein elastisches Halteelement (28) aufweisen, das in einer Querwand (22) des Behälters vorgesehen ist und das durch eine eingeführte Kassette (2) elastisch verformt wird.

6. Behälter (1) nach Anspruch 5, dadurch gekennzeichnet, dass das Halteelement (28) aus einem Material hergestellt ist, das sich im Vergleich zu dem Material des Behälters relativ leicht verformen lässt.

7. Behälter (1) nach Anspruch 6, dadurch gekennzeichnet, dass das Halteelement (28) aus einem Material mit gummiartigen Eigenschaften hergestellt ist.

8. Behälter (1) nach Anspruch 7, dadurch gekennzeichnet, dass Halteelement (28) ein Stöpsel in einer Öffnung (29) in einer Querwand (22) des Behälters aufweist.

9. Behälter (1) nach Anspruch 1, dadurch gekennzeichnet, dass an der Seite, die dem Kassettenaufnahmeraum (27) zugewandt ist, das Informationsblatt (34) ein Aussehen hat, das dem des Aufklebers (6) der Kassette (2) wenigstens im Wesentlichen entspricht.

10. Behälter (1) nach Anspruch 9, dadurch gekennzeichnet, dass der Informationsblattraum (32) mit einem Klappenraum (37) neben einer Seitenwand (23) des Behälters in Verbindung steht, und dass das Informationsblatt (34) eine Seitenklappe (36) hat, die sich in dem Klappenraum (37) erstreckt.

11. Behälter (1) nach Anspruch 1, dadurch gekennzeichnet, dass der Behälter zwei einzelne Teile (1A, 1B) aufweist, die aneinander befestigt sind.

12. Behälter (1) nach Anspruch 11, dadurch gekennzeichnet, dass der eine Teil (1A) die Vorderwand (20) mit der angrenzenden Seitenwand (22) und die Bodenwand (24) aufweist und dass der andere Teil (1B) die Rückwand (21) mit der anderen Seitenwand (23) aufweist.

13. Behälter nach Anspruch 12, dadurch gekennzeichnet, dass der genannte andere Teil (1B) aus einem transparenten Kunststoff hergestellt ist.

14. Behälter nach Anspruch 13, dadurch gekennzeichnet, dass der genannte eine Teil (1A) aus einem nicht transparenten Kunststoff hergestellt ist und im Wesentlichen diejenigen Teile einer in dem Behälter vorhandenen Kassette (2) völlig bedeckt, die sich neben dem Aufkleber (6) befinden.

15. Behälter nach Anspruch 1, dadurch gekennzeichnet, dass der Informationsblattraum (32) mit dem Kassettenaufnahmeraum (27) in offener Verbindung steht und dass zwischen dem Informationsblattraum und dem Kassettenaufnahmeraum innerhalb des behälters Ränder (38A, 38B) vorgesehen sind, und zwar an zwei einander gegenüberliegenden Seiten zum Zusammenarbeiten mit den Seitenrändern des Informationsblatts (34).

16. Behälter nach Anspruch 10 und 11, dadurch gekennzeichnet, dass eine innere Querwand (39), die einen Teil eines (1A) der Teile des Behälters bildet, zwischen dem Klappenraum (37) und dem Kassettenaufnahmeraum (27) derart vorgesehen ist, dass der Klappenraum durch eine Seitenwand (23) und die innere Querwand (39) begrenzt ist.

17. Behälter (100) nach Anspruch 1, dadurch gekennzeichnet, dass die offene Seite des Behälters mit einem Deckel (101) bedeckt werden kann, der mit dem Behälter gelenkig verbunden ist (Fig. 15-17).

18. Behälter (100) nach Anspruch 17, dadurch gekennzeichnet, dass der Deckel (101) durch ein Filmscharnier (102) mit einer Hauptwand (103) verbunden ist.

19. Behälter (100) nach Anspruch 17, dadurch gekennzeichnet, dass der Deckel (101) mit der Rückwand (103) des Behälters gelenkig verbunden ist, und dass ein Federmechanismus vorgesehen ist, wodurch der Deckel nur zwei stabile Lagen einnehmen kann, d. h. entweder eine völlig geschlossene Lage oder eine völlig geöffnete Lage.

20. Behälter nach Anspruch 13 und 18, dadurch gekennzeichnet, dass der transparente Teil des Behälters aus einem Styrol/Butadienblockcopolymer hergestellt ist.

21. Behälter nach einem oder mehreren der vorstehenden Ansprüche, dadurch gekennzeichnet, dass der Behälter eine Anzahl Kassettenaufnahmeräume hat.

22. Verfahren zum Entfernen einer rechteckigen Kassette (2) mit einem Aufzeichnungsmedium (3) auf einem Behälter (1) nach Anspruch 1, wobei die Kassette dadurch aus dem Behälter entfernt wird, dass der Behälter mit der darin festgeklemmten Kassette in die Hand genommen wird und dass danach die Kassette mit dem Daumen derselben Hand durch eine Öffnung (26) in der Wand (20) des Behälters wenigstens teilweise aus einer offenen Seite (25) des Behälters herausgeschoben und danach völlig aus dem Behälter entfernt wird.

23. Verfahren zum Entfernen einer Kassette (2) aus einem Behälter (1) nach Anspruch 22, und zum Einführen der Kassette in ein Gerät (4) durch einen Schlitz (41) in einer Vorderwand (42) des genannten Geräts hindurch, wobei dieses Verfahren die nachfolgenden Verfahrensschritte umfasst: das Einführen desjenigen Teils der Kassette, der aus dem Behälter herausgeschoben worden ist, in den Schlitz hinein, wonach die Kassette von einem Einführungsmechanismus des Geräts festgegriffen wird, wobei dieser Mechanismus die Kassette völlig aus dem Behälter heraus und in das Gerät hineinzieht.

24. Verfahren zum Entfernen einer Kassette (2) aus einem Gerät (40) und zum Einführen desselben in einen Behälter (1) nach Anspruch 1, wobei dieses Verfahren das Positionieren des Behälters mit einer offenen Seite vor der Vorderwand (42) eines Geräts gegenüber einem Schlitz (41) in der Vorderwand und das von dem Gerät aus gesteuerte, wenigstens teilweise Einführen der Kassette in den Behälter durch den Schlitz hindurch.

25. Verfahren nach Anspruch 24, wobei dieses Verfahren die nachfolgenden Verfahrensschritte umfasst: das Betätigen der Schaltmittel (43, 44) durch den Behälter (1) gegen die Vorderwand (42) und als Ergebnis dieses Vorgangs, das Herausschieben der Kassette (2) mittels eines Elektromotors.

26. Verfahren nach einem oder mehreren der vorstehenden Ansprüche 23 - 25, wobei dieses Verfahren die nachfolgenden Verfahrensschritte umfasst, das Führen des Behälters (1) durch Führungsflächen (45A-45D), die um den Schlitz (41) vorgesehen sind, in die durch Anschlagmittel (46) definierte Einführungslage, worin der Kassettenaufnahmeraum (27) fluchten liegt zu der Bahn, über welche die Kassette (2) von dem Einführungsmechanismus des Geräts (40) verlagert wird.

27. Verfahren zum Verlagern einer Kassette in/aus einem Behälter nach Anspruch 1, wobei dieses Verfahren die nachfolgenden Verfahrensschritte umfasst: das wenigstens teilweise Einführen des Behälters mit der Kassette in ein Gerät und das Verlagern der Kassette in/aus dem Behälter durch das Gerät selber innerhalb des Geräts.

## Revendications

1. Boîte (1) pour une cassette rectangulaire (2) pourvue d'un milieu d'enregistrement (3), ladite cassette ayant une paroi principale de cassette (4) facultativement pourvue d'une étiquette (6), ladite boîte comprenant une paroi avant (20) ayant une fenêtre (26) et une paroi arrière (21) qui sont parallèles à la paroi principale de cassette, deux parois latérales longues (22, 23), une paroi inférieure courte (24) et un côté ouvert (25) présent à l'opposé de la paroi inférieure courte, lesdites parois limitant un espace récepteur de cassette (27) dans la boîte dans laquelle la cassette peut être insérée par l'intermédiaire du côté ouvert, la fenêtre (26) comprenant une partie ouverte dans la paroi avant (20), la partie ouverte étant dimensionnée de telle façon que, lorsque la boîte est tenue dans la paume d'une main, la cassette (2) peut être sortie au moins partiellement de la boîte au moyen du pouce de la même main sur une paroi principale de cassette (7), caractérisée en ce que du côté opposé à la fenêtre 26 la boîte présente un espace d'annexe interne (32) pour l'insertion d'une annexe (34) qui peut comprendre une pluralité de pages (33) et en ce qu'en absence d'une cassette 2 l'annexe 34 est visible à partir de l'extérieur par la fenêtre (26) présente dans la paroi avant (20).

2. Boîte (1) selon la revendication 1, caractérisée en ce que la fenêtre (26) est entièrement ouverte.

3. Boîte (1) selon la revendication 2, caractérisée en ce que les dimensions de la fenêtre (26) sont sensiblement égales aux dimensions de l'étiquette (6) de la cassette (2).

4. Boîte (1) selon la revendication 1, caractérisée en ce que la boîte comporte des moyens de retenue internes pour serrer une cassette (2) qui a été insérée dans l'espace récepteur de cassette (27).

5. Boîte (1) selon la revendication 4, caractérisée en ce que les moyens de retenue comportent un élément de retenue élastique (28) qui se situe dans une paroi transversale (22) de la boîte et qui est déformé élastiquement par une cassette insérée (2).

6. Boîte (1) selon la revendication 5, caractérisée en ce que l'élément de retenue (28) est fabriqué à partir d'un matériau qui est relativement facile à déformer en comparaison du matériau de la boîte.

7. Boîte (1) selon la revendication 6, caractérisée en ce que l'élément de retenue (28) est fabriqué à partir d'un matériau présentant des propriétés ressemblant à celles de caoutchouc.

8. Boîte (1) selon la revendication 7, caractérisée en ce que l'élément de retenue (28) comporte un bouchon disposé dans une ouverture (29) présente dans une paroi transversale (22) de la boîte.

9. Boîte (1) selon la revendication 1, caractérisée en ce que de son côté faisant face à l'espace récepteur de cassette (27) l'annexe (34) reçoit un aspect qui est au moins sensiblement similaire à l'aspect de l'étiquette (6) de la cassette (2).

10. Boîte (1) selon la revendication 9, caractérisée en ce que l'espace d'annexe (32) communique avec un espace de rabat (37) contigu à une paroi latérale (23) de la boîte et en ce que l'annexe (34) présente un rabat latéral (36) qui s'étend dans l'espace de rabat (37).

11. Boîte (1) selon la revendication 1, caractérisée en ce que la boîte comprend deux parties individuelles (1A, 1B) qui sont fixées l'une à l'autre.

12. Boîte (1) selon la revendication 11, caractérisée en ce qu'une partie (1A) comprend la paroi avant (20) avec une paroi latérale contiguë (22) et la paroi inférieure (24) et en ce que l'autre partie (1B) comprend la paroi arrière (21) avec l'autre paroi latérale (23).

13. Boîte selon la revendication 12, caractérisée en ce que ladite autre partie (1B) est fabriquée à partir d'une matière plastique transparente.

14. Boîte selon la revendication 13, caractérisée en ce que ladite partie (1A) est fabriquée à partir d'une matière plastique non transparente et couvre d'une manière sensiblement complète ces parties d'une cassette (2) présente dans la boîte qui sont contiguës à l'étiquette (6).

15. Boîte selon la revendication 1, caractérisée en ce que l'espace d'annexe (32) est en communication ouverte avec l'espace récepteur de cassette (27) et en ce qu'entre l'espace d'annexe et l'espace récepteur de cassette a l'intérieur de la boîte il se forme des côtés opposés des cannelures (38A, 38B) pour coopérer avec des bords latéraux de l'annexe (34).

16. Boîte selon les revendications 10 et 11, caractérisée en ce qu'une paroi transversale interne (39) qui fait partie d'une (1A) des parties de la boîte est interposée entre l'espace de rabat (37) et l'espace récepteur de cassette (27) de telle façon que l'espace de rabat soit limité par une paroi latérale (23) et la paroi transversale interne (39).

17. Boîte (100) selon la revendication 1, caractérisée en ce que le côté ouvert d'une boîte peut être couvert d'une couverture (101) qui est reliée d'une manière pivotante à la boîte (figures 15 à 17).

18. Boîte (100) selon la revendication 17, caractérisée en ce que la couverture (101) est reliée à une paroi principale (103) par une articulation intégrée (102) en matière plastique.

19. Boîte (100) selon la revendication 17, caractérisée en ce que la couverture (101) est reliée d'une manière pivotante à la paroi arrière (103) de la boîte et en ce qu'il est fourni un mécanisme à ressort permettant à la couverture d'occuper seulement deux positions stables, c'est-à-dire soit une position entièrement fermée, soit une position entièrement ouverte.

20. Boîte selon les revendications 13 et 18, caractérisée en ce que la partie transparente de la boîte est fabriquée à partir d'un copolymère en bloc constitué de styrène/butadiène.

21. Boîte selon l'une quelconque ou selon plusieurs des revendications précédentes, caractérisée en ce que la boîte présente une pluralité d'espaces récepteurs de cassettes.

22. Procédé pour enlever d'une boîte (1) une cassette rectangulaire (2) pourvue d'un milieu d'enregistrement (3), comme défini dans la revendication 1, suivant lequel on enlève la cassette de la boîte en tenant la boîte avec la cassette y étant serrée dans une main, en sortant la cassette au moins partiellement d'un côté ouvert (25) de la boîte au moyen du pouce de la même main par l'ouverture (26) présente dans la paroi (20) de la boîte et en l'enlevant ensuite complètement de la boîte.

23. Procédé pour enlever une cassette (2) d'une boîte (1), selon la revendication 22, et pour charger la cassette dans un appareil (40) par l'intermédiaire d'une rainure (41) présente dans un panneau avant (42) dudit appareil, le procédé comprenant l'insertion de la partie de la cassette qui a été sortie de la boîte dans la rainure, après quoi la cassette est saisie par un mécanisme de chargement de l'appareil, ledit mécanisme extrayant la cassette complètement de la boîte dans l'appareil.

24. Procédé pour enlever une cassette (2) d'un appareil (40) et pour l'insérer dans une boîte (1) selon la revendication 1, le procédé comprenant le positionnement de la boîte avec un côté ouvert devant le panneau avant (42) d'un appareil à l'opposé d'une rainure (41) présente dans le panneau avant et l'insertion au moins partielle de la cassette dans la boîte à travers la rainure par l'appareil.

25. Procédé selon la revendication 24, comprenant l'actionnement de moyens commutateurs (43, 44) par la boîte (1) contre le panneau avant (42) et, en conséquence, le déplacement vers l'extérieur de la cassette (2) au moyen d'un moteur électrique.

26. Procédé selon l'une quelconque ou selon plusieurs des revendications précédentes 23 à 25, comprenant le guidage de la boîte (1) par des surfaces de guidage (45A-45D) prévues autour de la rainure (41) vers une position d'amarrage définie par des moyens d'arrêt (46), position dans laquelle l'espace récepteur de cassette (27) est disposé en ligne avec le trajet (48) le long duquel la cassette (2) est déplacée par le mécanisme de chargement de l'appareil (40).

27. Procédé pour déplacer une cassette dans ou pour la sortir d'une boîte selon la revendication 1, le procédé comprenant l'insertion au moins partielle de la boîte avec la cassette dans un appareil et le déplacement de la cassette dans ou sa sortie de la boîte par l'appareil lui-même à l'intérieur de l'appareil.
